# FASCICULE DE BREVET EUROPEEN

(11) **EP 3 515 749 B1**
(45) Date de publication et mention de la délivrance du brevet: **07.10.2020**
(21) Numéro de dépôt: 17780495.2
(22) Date de dépôt: 22.09.2017
(51) Int. Cl.: B60L 53/24, B60L 55/00

(54) **DISPOSITIF DE CONVERSION, PROCÉDÉ DE COMMANDE ET VÉHICULE ASSOCIES**
LEISTUNGSWANDLER, REGLER UND DAMIT VERBUNDENEN FAHRZEUG
CONVERTER, CONTROLLER AND ASSOCIATED VEHICLE

(30) Priorité: 22.09.2016 FR 1658931
(43) Date de publication de la demande: 31.07.2019
(73) Titulaire: IFP Energies nouvelles, 92500 Rueil-Malmaison (FR)
(72) Inventeur: MILIANI, El Hadj, 92500 Rueil Malmaison (FR); KEFSI, Laid, 94800 Villejuif (FR); ZEIN, Ismail, 92400 Courbevoie (FR)
(74) Mandataire: Brevalex
(86) Numéro de dépôt international: PCT/FR2017/052553
(87) Numéro de publication internationale: WO 2018/055305

(56) Documents cités:
- FR-A1- 2 985 104
- US-A1- 2014 001 854
- US-A1- 2015 042 277
- US-A1- 2015 375 628

## Description

### DOMAINE TECHNIQUE

La présente invention concerne un dispositif de conversion pour véhicule électrique, permettant de transférer de l'énergie électrique entre un réseau continu et un réseau alternatif à N phases, N étant un entier supérieur ou égal à 1. L'invention concerne également un procédé de commande d'un tel dispositif de conversion et un véhicule comportant un tel dispositif.

L'invention s'applique au domaine des convertisseurs électriques, en particulier des convertisseurs électriques pour véhicules électriques ou hybrides.

### ÉTAT DE LA TECHNIQUE ANTÉRIEURE

Un véhicule électrique, respectivement un véhicule hybride, comporte une source d'énergie électrique destinée à fournir de l'énergie nécessaire à actionner un moteur de traction électrique pour assurer la propulsion du véhicule. La source d'énergie est généralement une batterie embarquée destinée à alimenter le moteur de traction à travers un onduleur.

Or, la batterie ne peut stocker qu'une quantité limitée d'énergie, et nécessite donc d'être rechargée régulièrement à partir d'une autre source d'énergie plus puissante, tel qu'un réseau électrique domestique. Durant l'opération de recharge, un chargeur envoie l'énergie du réseau vers la batterie pour la charger.

Le véhicule électrique ou hybride est également susceptible de restituer son énergie stockée au réseau électrique : on parle alors de « V2G » (de l'anglais « *Vehicle to Grid »,* signifiant du véhicule au réseau). Dans ce cas, un élément électronique de puissance est fourni pour envoyer cette énergie au réseau électrique.

Toutes ces opérations doivent être réalisées dans le respect des normes de compatibilité électromagnétique et de sécurité, et doivent être commandées par un système de contrôle performant.

En général, ces opérations sont assurées par des dispositifs d'électronique de puissance distincts, comme par exemple, un onduleur, un chargeur, un convertisseur DC-DC.

La multiplicité de tels équipements se traduit par un encombrement élevé, des contraintes thermiques nécessitant un système de refroidissement propre à refroidir l'ensemble de ces équipements, ainsi qu'un coût de fabrication élevé.

Les publications de brevet US2015/375628 A1 et WO 2010/057892 A1 décrivent un dispositif de conversion pour véhicule électrique dans lequel les fonctions onduleur et chargeur d'un véhicule électrique sont intégrées dans un même organe.

Néanmoins, un tel dispositif de conversion ne donne pas entière satisfaction.

En effet, un tel dispositif comprend deux branches distinctes pour trois phases, ce qui rend sa fabrication complexe et coûteuse. En outre, un tel dispositif de conversion requiert un moteur électrique spécifique nécessitant un actionnement mécanique particulier pour passer d'un mode de fonctionnement à un autre. En outre, un tel dispositif de conversion ne comporte aucun élément d'isolation galvanique susceptible d'empêcher les risques électriques aux personnes et au matériel.

Un but de l'invention est donc de proposer un dispositif de conversion présentant un encombrement et un coût de fabrication plus faibles que les dispositifs de conversion de l'état de la technique, tout en présentant un fonctionnement plus simple et sécurisé.

### EXPOSÉ DE L'INVENTION

A cet effet, l'invention a pour objet un dispositif de conversion du type précité, comportant :
- un convertisseur DC-DC comprenant :
   - une branche basse tension connectée entre une première borne basse tension et une deuxième borne basse tension, et une branche haute tension connectée entre une première borne haute tension et une deuxième borne haute tension, chacune parmi la branche basse tension et la branche haute tension comprenant deux sous-branches en série connectées entre elles en un point milieu, chaque sous-branche comprenant un module de commutation ;

   - un premier interrupteur connecté entre la première borne basse tension et la première borne haute tension, et un deuxième interrupteur connecté entre la deuxième borne basse tension et la deuxième borne haute tension ;
   - un transformateur comprenant un enroulement primaire et un enroulement secondaire magnétiquement couplés entre eux, l'enroulement primaire étant connecté, par l'une de ses extrémités, au point milieu de la branche basse tension, et par l'autre de ses extrémités à une référence de tension primaire, et l'enroulement secondaire étant connecté, par l'une de ses extrémités, au point milieu de la branche haute tension, et par l'autre de ses extrémités à une référence de tension secondaire ;
- un convertisseur AC-DC connecté d'une part à la première borne haute tension et à la deuxième borne haute tension du convertisseur DC-DC, comportant N points de connexion chacun propres à être raccordé à une phase correspondante du réseau alternatif ;
- un contrôleur configuré pour piloter l'état passant ou bloqué du premier interrupteur, du deuxième interrupteur et de chaque module de commutation, le contrôleur étant, en outre, configuré pour piloter le convertisseur AC-DC pour transférer de l'énergie électrique depuis le convertisseur DC-DC vers le réseau alternatif, ou depuis le réseau alternatif vers le convertisseur DC-DC.

En effet, grâce à un tel dispositif de conversion, aucun actionnement mécanique n'est requis pour passer d'un mode de fonctionnement à un autre. Le fonctionnement d'un tel dispositif de conversion est donc simplifié.

En outre, dans un tel dispositif de conversion, un unique circuit est propre à réaliser les diverses opérations de conversion, ce qui se traduit par un encombrement moindre et un coût de fabrication plus faible que les dispositifs de conversion de l'état de la technique. Une telle intégration de fonctions conduit en outre à l'utilisation d'un unique circuit de refroidissement, ce qui réduit davantage l'encombrement dû au dispositif de conversion.

En outre, la présence du transformateur assure une isolation galvanique entre les éléments à courant continu et les éléments à courant alternatif, ce qui a pour effet de limiter les risques électriques aux personnes et au matériel.

Suivant d'autres aspects avantageux de l'invention, le dispositif de conversion comporte une ou plusieurs des caractéristiques suivantes, prise(s) isolément ou suivant toutes les combinaisons techniquement possibles :
- le contrôleur est configuré pour, lors d'une phase de traction ou lors d'une phase de restitution d'énergie :
   - commander le premier interrupteur et le deuxième interrupteur pour qu'ils soient dans un état bloqué ;
   - piloter les modules de commutation du convertisseur DC-DC selon une loi de commande de convertisseur boost configuré pour transférer de l'énergie électrique depuis la branche basse tension vers la branche haute tension ;
   - piloter le convertisseur AC-DC selon une loi de commande d'onduleur configuré pour transférer de l'énergie depuis la branche haute tension vers les points de connexion du convertisseur AC-DC;
- le contrôleur est configuré pour, lors d'une phase de charge rapide :
   - commander le premier interrupteur et le deuxième interrupteur pour qu'ils soient dans un état bloqué ;
   - piloter le convertisseur AC-DC selon une loi de commande de redresseur configuré pour transférer de l'énergie depuis les points de connexion du convertisseur AC-DC vers la branche haute tension ;
   - piloter les modules de commutation du convertisseur DC-DC selon une loi de commande de convertisseur buck configuré pour transférer de l'énergie électrique depuis la branche haute tension vers la branche basse tension ;
   - le contrôleur est configuré pour, lors d'une phase de charge lente durant laquelle deux points de connexion actifs du convertisseur AC-DC sont propres à recevoir de l'énergie électrique depuis le réseau alternatif :
      - commander le premier interrupteur et le deuxième interrupteur pour qu'ils soient dans un état passant ;
      - piloter le convertisseur AC-DC selon une loi de commande d'un redresseur pont en H configuré pour transférer de l'énergie depuis les points de connexion actifs du convertisseur AC-DC vers la branche haute tension ;
   - le convertisseur DC-DC comprend, en outre :
      - une branche auxiliaire s'étendant entre deux bornes de connexion, et comprenant deux sous-branches en série connectées entre elles en un point milieu, chaque sous-branche comprenant un module de commutation propre à commuter entre une position bloquée empêchant le passage d'un courant électrique, et une position passant permettant le passage d'un courant électrique ;
      - un enroulement auxiliaire magnétiquement couplé à l'enroulement primaire du transformateur, l'enroulement primaire étant connecté, par l'une de ses extrémités, au point milieu de la branche auxiliaire, et par l'autre de ses extrémités à une référence de tension auxiliaire ;
      et le contrôleur est configuré pour, lors d'une phase de charge d'accumulateur :
      - commander le premier interrupteur et le deuxième interrupteur pour qu'ils soient dans un état bloqué ;
      - piloter les modules de commutation de la branche auxiliaire selon une loi de commande de convertisseur buck configuré pour transférer de l'énergie électrique depuis la branche haute tension vers la branche auxiliaire.

En outre, l'invention a pour objet un procédé de commande d'un dispositif de conversion tel que défini ci-dessus, le convertisseur DC-DC étant relié à un réseau continu par la première borne basse tension et par la deuxième borne basse tension, le procédé comportant, lors d'une phase de traction, les étapes de :
- raccordement de chaque point de connexion du convertisseur AC-DC à une phase correspondante d'un moteur électrique ;
- commande du premier interrupteur et du deuxième interrupteur pour qu'ils soient dans un état bloqué ;
- pilotage des modules de commutation du convertisseur DC-DC selon une loi de commande de convertisseur boost pour transférer de l'énergie électrique depuis le réseau continu vers la branche haute tension ;
- pilotage du convertisseur AC-DC selon une loi de commande d'onduleur pour transférer de l'énergie depuis la branche haute tension vers le moteur électrique.

Suivant d'autres aspects avantageux de l'invention, le procédé comporte une ou plusieurs des caractéristiques suivantes, prise(s) isolément ou suivant toutes les combinaisons techniquement possibles :
- le procédé comporte, lors d'une phase de restitution d'énergie, les étapes de :
   - raccordement de chaque point de connexion du convertisseur AC-DC à une phase correspondante d'un réseau alternatif ;
   - commande du premier interrupteur et du deuxième interrupteur pour qu'ils soient dans un état bloqué ;
   - pilotage des modules de commutation du convertisseur DC-DC selon une loi de commande de convertisseur boost pour transférer de l'énergie électrique depuis le réseau continu vers la branche haute tension ;
   - pilotage du convertisseur AC-DC selon une loi de commande d'onduleur pour transférer de l'énergie depuis la branche haute tension vers le réseau alternatif ;
- le procédé comporte, lors d'une phase de charge rapide, les étapes de :
   - raccordement de chaque point de connexion du convertisseur AC-DC à une phase correspondante d'un réseau alternatif ;
   - commande du premier interrupteur et du deuxième interrupteur pour qu'ils soient dans un état bloqué ;
   - pilotage du convertisseur AC-DC selon une loi de commande de redresseur pour transférer de l'énergie depuis le réseau alternatif vers la branche haute tension ;
   - pilotage des modules de commutation du convertisseur DC-DC selon une loi de commande de convertisseur buck pour transférer de l'énergie électrique depuis la branche haute tension vers le réseau continu ;
- le procédé comporte, lors d'une phase de charge lente, les étapes de :
   - raccordement de deux points de connexion actifs du convertisseur AC-DC à des phases correspondantes d'un réseau alternatif :
   - commande du premier interrupteur et du deuxième interrupteur pour qu'ils soient dans un état passant ;
   - pilotage du convertisseur AC-DC selon une loi de commande de pont en H pour transférer de l'énergie depuis le réseau alternatif vers le réseau continu ;
- le procédé comporte, lors d'une phase de charge auxiliaire, les étapes de :
   - commande du premier interrupteur et du deuxième interrupteur pour qu'ils soient dans un état bloqué ;
- pilotage des modules de commutation du convertisseur DC-DC et de la branche auxiliaire selon une loi de commande de convertisseur buck pour transférer de l'énergie électrique depuis le réseau continu vers la branche auxiliaire.

En outre, l'invention a pour objet un véhicule électrique ou hybride comportant une batterie, un moteur électrique et un dispositif de conversion tel que défini ci-dessus, le convertisseur DC-DC étant relié à la batterie par la première borne basse tension et par la deuxième borne basse tension, chaque point de connexion du convertisseur AC-DC étant adapté pour être raccordé à une phase correspondante du moteur électrique.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

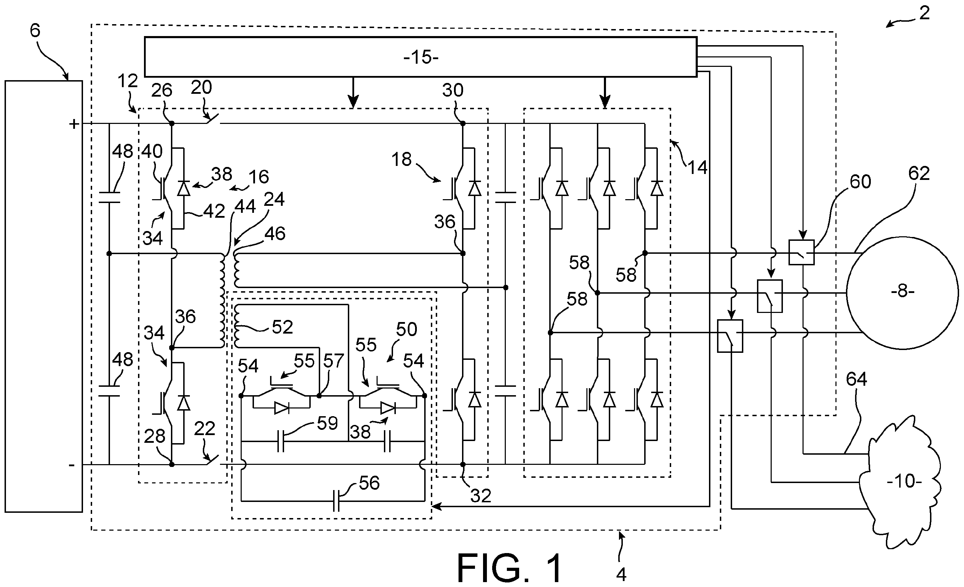

- la figure 1 est une représentation schématique d'une chaîne d'électrification pour véhicule électrique ou hybride selon l'invention.

### EXPOSÉ DÉTAILLÉ DE MODES DE RÉALISATION PARTICULIERS

Une chaîne d'électrification 2 selon l'invention est représentée sur la figure 1. La chaîne d'électrification 2 est notamment destinée à être embarquée à bord d'un véhicule électrique ou hybride, par exemple une voiture électrique ou hybride.

La chaîne d'électrification 2 comprend un dispositif de conversion 4, configuré pour transférer de l'énergie électrique entre un réseau continu et un réseau alternatif à N phases, N étant un entier supérieur ou égal à 1.

Le réseau continu est constitué par une batterie 6.

Le réseau alternatif est constitué par un moteur électrique 8 ou par un réseau 10 de distribution de courant alternatif.

Le dispositif de conversion 4 comporte un convertisseur DC-DC 12, un convertisseur AC-DC 14 et un contrôleur 15.

Le convertisseur DC-DC 12 est configuré pour convertir une première tension électrique continue en une deuxième tension continue différente.

Le convertisseur AC-DC 14 est configuré pour convertir une tension électrique continue en une tension électrique alternative, et pour convertir une tension électrique alternative en une tension électrique continue.

Le convertisseur DC-DC 12 comporte une branche basse tension 16, une branche haute tension 18, un premier interrupteur 20, un deuxième interrupteur 22 et un transformateur 24.

La branche basse tension 16 est connectée entre une première borne basse tension 26 et une deuxième borne basse tension 28. En outre, la branche haute tension 18 est connectée entre une première borne haute tension 30 et une deuxième borne haute tension 32.

Comme cela apparaît sur la figure 1, le convertisseur DC-DC 12 est connecté à la batterie 6 par l'intermédiaire de la première borne basse tension 26 et de la deuxième borne basse tension 28.

La branche basse tension 16 et la branche haute tension 18 comprennent chacune deux sous-branches 34 en série, connectées entre elles en un point milieu 36.

Chaque sous-branche 34 comporte un module de commutation 38 propre à commuter entre un état bloqué empêchant la circulation d'un courant électrique, et un état passant permettant la circulation d'un courant électrique.

Par exemple, chaque module de commutation 38 comprend un transistor 40 et une diode 42 en parallèle, la diode étant montée en inverse par rapport au transistor 40. Par exemple, le transistor 40 est un transistor MOSFET ou un transistor IGBT.

Le premier interrupteur 20 est connecté entre la première borne basse tension 26 et la première borne haute tension 30. En outre, le deuxième interrupteur 22 est connecté entre la deuxième borne basse tension 28 et la deuxième borne haute tension 32.

Le premier interrupteur 20 et le deuxième interrupteur 22 sont chacun propres à commuter entre un état bloqué empêchant la circulation d'un courant électrique, et un état passant permettant la circulation d'un courant électrique.

Le transformateur 24 comprend un enroulement primaire 44 et un enroulement secondaire 46 magnétiquement couplés entre eux.

L'enroulement primaire 44 est connecté, par l'une de ses extrémités, au point milieu 36 de la branche basse tension 16, et par l'autre de ses extrémités à une référence de tension primaire.

Par exemple, et comme illustré par la figure 1, la référence de tension primaire est constituée par un point milieu 36 entre deux condensateurs 48 en série, connectés en parallèle de la branche basse tension 16, entre la première borne basse tension 26 et la deuxième borne basse tension 28.

L'enroulement secondaire 46 est connecté, par l'une de ses extrémités, au point milieu 36 de la branche haute tension 18, et par l'autre de ses extrémités à une référence de tension secondaire.

Par exemple, et comme illustré par la figure 1, la référence de tension secondaire est constituée par un point milieu 36 entre deux condensateurs 48 en série, connectés en parallèle de la branche haute tension 18, entre la première borne haute tension 30 et la deuxième borne basse tension 32.

Avantageusement, le convertisseur DC-DC comprend, en outre, une branche auxiliaire 50 et un enroulement auxiliaire 52.

La branche auxiliaire 50 s'étend entre deux bornes de connexion 54, et comprend deux sous-branches 55 en série connectées entre elles en un point milieu 57. Chaque sous-branche 55 de la branche auxiliaire 50 est similaire aux sous-branches 34 de la branche basse tension 16 ou de la branche haute tension 18.

L'enroulement auxiliaire 52 est magnétiquement couplé à l'enroulement primaire 44 du transformateur 24. En outre, l'enroulement auxiliaire 52 est connecté, par l'une de ses extrémités, au point milieu 57 de la branche auxiliaire 50, et par l'autre de ses extrémités à une référence de tension auxiliaire.

Par exemple, et comme illustré par la figure 1, la référence de tension auxiliaire est constituée par un point milieu entre deux condensateurs 59 en série, connectés en parallèle de la branche auxiliaire 50, entre les deux bornes de connexion 54.

Comme illustré par la figure 1, un accumulateur 56 est connecté aux bornes de connexion 54 de la branche auxiliaire 50.

Le convertisseur AC-DC 14 comporte N points de connexion 58, chaque point de connexion étant raccordé à un commutateur 60 correspondant.

Chaque commutateur 60 est propre à être commandé pour raccorder un point de connexion 58 du convertisseur AC-DC 14 à une phase correspondante du moteur 8 ou du réseau de distribution 10.

En outre, le convertisseur AC-DC 14 est connecté au convertisseur DC-DC au niveau de la première borne haute tension 30 et de la deuxième borne haute tension 32.

Le convertisseur AC-DC 14 présente une architecture connue permettant un fonctionnement en onduleur, en redresseur ou en pont en H.

Le contrôleur 15 est configuré pour piloter l'état passant ou bloqué du premier interrupteur 20, du deuxième interrupteur 22 et de chaque module de commutation 38.

Le contrôleur 15 est, en outre, configuré pour piloter le convertisseur AC-DC pour faire fonctionner le convertisseur AC-DC en onduleur, en redresseur ou en pont en H.

Le fonctionnement de la chaîne d'électrification 2 va maintenant être décrit.

Lors d'une phase de traction, durant laquelle de l'énergie doit être transférée depuis la batterie 6 vers le moteur électrique 8, le contrôleur 15 commande les commutateurs 60 pour raccorder chaque point de connexion 58 du convertisseur AC-DC 14 à une phase 62 correspondante du moteur électrique 8.

Le contrôleur 15 commande également le premier interrupteur 20 et le deuxième interrupteur 22 pour qu'ils soient dans un état bloqué.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18. Le contrôleur 15 pilote également le convertisseur AC-DC 14 selon une loi de commande d'onduleur connue pour transférer de l'énergie depuis la branche haute tension 18 vers le moteur électrique 8.

Lors d'une phase de restitution d'énergie, encore appelée « V2G », durant laquelle de l'énergie électrique doit être transférée depuis la batterie 6 vers le réseau de distribution 10, le contrôleur 15 commande les commutateurs 60 pour raccorder chaque point de connexion 58 du convertisseur AC-DC 14 à une phase 64 correspondante du réseau de distribution 10.

Le contrôleur 15 commande également le premier interrupteur 20 et le deuxième interrupteur 22 pour qu'ils soient dans un état bloqué.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18. Le contrôleur 15 pilote également le convertisseur AC-DC 14 selon une loi de commande d'onduleur pour transférer de l'énergie depuis la branche haute tension 18 vers le réseau de distribution 10.

Lors d'une phase de charge rapide, durant laquelle de l'énergie doit être transférée depuis toutes les phases 64 du réseau de distribution 10 vers la batterie 6 pour charger la batterie 6, le contrôleur 15 commande les commutateurs 60 pour raccorder chaque point de connexion 58 du convertisseur AC-DC 14 à une phase 64 correspondante du réseau de distribution 10.

Le contrôleur 15 commande également le premier interrupteur 20 et le deuxième interrupteur 22 pour qu'ils soient dans un état bloqué.

En outre, le contrôleur 15 pilote le convertisseur AC-DC 12 selon une loi de commande de redresseur connue pour transférer de l'énergie depuis le réseau de distribution 10 vers la branche haute tension 18. Le contrôleur 15 pilote également les modules de commutation 38 du convertisseur DC-DC 12 selon une loi de commande de convertisseur buck connue pour transférer de l'énergie électrique depuis la branche haute tension 18 vers la batterie 6.

Lors d'une phase de charge lente, durant laquelle de l'énergie doit être transférée depuis deux phases 64 du réseau de distribution 10 vers la batterie 6 pour charger la batterie 6, le contrôleur 15 commande les commutateurs 60 pour raccorder lesdites deux phases 64 au point de connexion 58 correspondant du convertisseur AC-DC 14, dit « point de connexion actif ». Les autres points de connexion 58 du convertisseur AC-DC 14 ne sont pas connectés.

Le contrôleur 15 commande également le premier interrupteur 20 et le deuxième interrupteur 22 pour qu'ils soient dans un état passant, de sorte que le transformateur 24 est bypassé, c'est-à-dire hors circuit.

En outre, le contrôleur 15 pilote le convertisseur AC-DC 12 selon une loi de commande de pont en H connue pour transférer de l'énergie depuis le réseau de distribution vers la batterie 6.

Lors d'une phase de charge auxiliaire, durant laquelle de l'énergie électrique doit être transférée depuis la batterie 6 vers l'accumulateur 56, le contrôleur 15 commande le premier interrupteur 20 et le deuxième interrupteur 22 pour qu'ils soient dans un état bloqué.

En outre, le contrôleur 15 pilote les modules de commutation 38 du convertisseur DC-DC 12 et de la branche auxiliaire 50 selon une loi de commande de convertisseur buck connue pour transférer de l'énergie électrique depuis la batterie 6 vers l'accumulateur 56.

## Revendications

1. Dispositif de conversion (4) pour véhicule électrique, permettant de transférer de l'énergie électrique entre un réseau continu (6) et un réseau alternatif (10) à N phases, N étant un entier supérieur ou égal à 1,
le dispositif de conversion (4) comprenant:
- un convertisseur DC-DC (12) comprenant :
- une branche basse tension (16) connectée entre une première borne basse tension (26) et une deuxième borne basse tension (28), et une branche haute tension (18) connectée entre une première borne haute tension (30) et une deuxième borne haute tension (32), chacune parmi la branche basse tension (16) et la branche haute tension (18) comprenant deux sous-branches (34) en série connectées entre elles en un point milieu (36), chaque sous-branche (34) comprenant un module de commutation (38) ;
- un premier interrupteur (20) connecté entre la première borne basse tension (26) et la première borne haute tension (30), et un deuxième interrupteur (22) connecté entre la deuxième borne basse tension (28) et la deuxième borne haute tension (32) ;
- un transformateur (24) comprenant un enroulement primaire (44) et un enroulement secondaire (46) magnétiquement couplés entre eux, l'enroulement primaire (44) étant connecté, par l'une de ses extrémités, au point milieu (36) de la branche basse tension (16), et par l'autre de ses extrémités à une référence de tension primaire, et l'enroulement secondaire (46) étant connecté, par l'une de ses extrémités, au point milieu (36) de la branche haute tension (18), et par l'autre de ses extrémités à une référence de tension secondaire ;
- un convertisseur AC-DC (14) connecté d'une part à la première borne haute tension (30) et à la deuxième borne haute tension (32) du convertisseur DC-DC (12), comportant N points de connexion (58) chacun propres à être raccordé à une phase correspondante du réseau alternatif (10) ;
- un contrôleur (15) configuré pour piloter l'état passant ou bloqué du premier interrupteur (20), du deuxième interrupteur (22) et de chaque module de commutation (38), le contrôleur (15) étant, en outre, configuré pour piloter le convertisseur AC-DC (14) pour transférer de l'énergie électrique depuis le convertisseur DC-DC (12) vers le réseau alternatif (10), ou depuis le réseau alternatif (10) vers le convertisseur DC-DC (12).

2. Dispositif de conversion (4) selon la revendication 1, dans lequel le contrôleur (15) est configuré pour, lors d'une phase de traction ou lors d'une phase de restitution d'énergie :
- commander le premier interrupteur (20) et le deuxième interrupteur (22) pour qu'ils soient dans un état bloqué ;
- piloter les modules de commutation (38) du convertisseur DC-DC (12) selon une loi de commande de convertisseur boost configuré pour transférer de l'énergie électrique depuis la branche basse tension (16) vers la branche haute tension (18) ;
- piloter le convertisseur AC-DC (14) selon une loi de commande d'onduleur configuré pour transférer de l'énergie depuis la branche haute tension (18) vers les points de connexion (58) du convertisseur AC-DC (14).

3. Dispositif de conversion (4) selon la revendication 1 ou 2, dans lequel le contrôleur (15) est configuré pour, lors d'une phase de charge rapide :
- commander le premier interrupteur (20) et le deuxième interrupteur (22) pour qu'ils soient dans un état bloqué ;
- piloter le convertisseur AC-DC (14) selon une loi de commande de redresseur configuré pour transférer de l'énergie depuis les points de connexion (58) du convertisseur AC-DC (14) vers la branche haute tension (18) ;
- piloter les modules de commutation (38) du convertisseur DC-DC (12) selon une loi de commande de convertisseur buck configuré pour transférer de l'énergie électrique depuis la branche haute tension (18) vers la branche basse tension (16).

4. Dispositif de conversion (4) selon l'une quelconque des revendications 1 à 3, dans lequel le contrôleur (15) est configuré pour, lors d'une phase de charge lente durant laquelle deux points de connexion (58) actifs du convertisseur AC-DC (14) sont propres à recevoir de l'énergie électrique depuis le réseau alternatif (10) :
- commander le premier interrupteur (20) et le deuxième interrupteur (22) pour qu'ils soient dans un état passant ;
- piloter le convertisseur AC-DC (14) selon une loi de commande d'un redresseur pont en H configuré pour transférer de l'énergie depuis les points de connexion (58) actifs du convertisseur AC-DC (14) vers la branche haute tension (18).

5. Dispositif de conversion (4) selon l'une quelconque des revendications 1 à 4, dans lequel le convertisseur DC-DC (12) comprend, en outre :
- une branche auxiliaire (50) s'étendant entre deux bornes de connexion, et comprenant deux sous-branches (55) en série connectées entre elles en un point milieu (57), chaque sous-branche (55) comprenant un module de commutation (38) propre à commuter entre une position bloquée empêchant le passage d'un courant électrique, et une position passant permettant le passage d'un courant électrique ;
- un enroulement auxiliaire (52) magnétiquement couplé à l'enroulement primaire (44) du transformateur (24), l'enroulement primaire (44) étant connecté, par l'une de ses extrémités, au point milieu (57) de la branche auxiliaire (50), et par l'autre de ses extrémités à une référence de tension auxiliaire ;
et dans lequel le lequel le contrôleur (15) est configuré pour, lors d'une phase de charge d'accumulateur (56) :
- commander le premier interrupteur (20) et le deuxième interrupteur (22) pour qu'ils soient dans un état bloqué ;
- piloter les modules de commutation (38) de la branche auxiliaire (50) selon une loi de commande de convertisseur buck configuré pour transférer de l'énergie électrique depuis la branche haute tension (18) vers la branche auxiliaire (50).

6. Procédé de commande d'un dispositif de conversion (4) selon l'une quelconque des revendications 1 à 5, le convertisseur DC-DC (12) étant relié à un réseau continu (6) par la première borne basse tension (26) et par la deuxième borne basse tension (28), le procédé comportant, lors d'une phase de traction, les étapes de :
- raccordement de chaque point de connexion (58) du convertisseur AC-DC (14) à une phase correspondante d'un moteur électrique (8) ;
- commande du premier interrupteur (20) et du deuxième interrupteur (22) pour qu'ils soient dans un état bloqué ;
- pilotage des modules de commutation (38) du convertisseur DC-DC (12) selon une loi de commande de convertisseur boost pour transférer de l'énergie électrique depuis le réseau continu (6) vers la branche haute tension (18) ;
- pilotage du convertisseur AC-DC (14) selon une loi de commande d'onduleur pour transférer de l'énergie depuis la branche haute tension (18) vers le moteur électrique (8).

7. Procédé selon la revendication 6, comportant, lors d'une phase de restitution d'énergie, les étapes de :
- raccordement de chaque point de connexion (58) du convertisseur AC-DC (14) à une phase correspondante d'un réseau alternatif (10) ;
- commande du premier interrupteur (20) et du deuxième interrupteur (22) pour qu'ils soient dans un état bloqué ;
- pilotage des modules de commutation (38) du convertisseur DC-DC (12) selon une loi de commande de convertisseur boost pour transférer de l'énergie électrique depuis le réseau continu (6) vers la branche haute tension (18) ;
- pilotage du convertisseur AC-DC (14) selon une loi de commande d'onduleur pour transférer de l'énergie depuis la branche haute tension (18) vers le réseau alternatif (10).

8. Procédé selon la revendication 6 ou 7, comportant, lors d'une phase de charge rapide, les étapes de :
- raccordement de chaque point de connexion (58) du convertisseur AC-DC (14) à une phase correspondante d'un réseau alternatif (10) ;
- commande du premier interrupteur (20) et du deuxième interrupteur (22) pour qu'ils soient dans un état bloqué ;
- pilotage du convertisseur AC-DC (14) selon une loi de commande de redresseur pour transférer de l'énergie depuis le réseau alternatif (10) vers la branche haute tension (18) ;
- pilotage des modules de commutation (38) du convertisseur DC-DC (12) selon une loi de commande de convertisseur buck pour transférer de l'énergie électrique depuis la branche haute tension (18) vers le réseau continu (6).

9. Procédé selon l'une quelconque des revendications 6 à 8, comportant, lors d'une phase de charge lente, les étapes de :
- raccordement de deux points de connexion (58) actifs du convertisseur AC-DC (14) à des phases correspondantes d'un réseau alternatif (10) :
- commande du premier interrupteur (20) et du deuxième interrupteur (22) pour qu'ils soient dans un état passant ;
- pilotage du convertisseur AC-DC (14) selon une loi de commande de pont en H pour transférer de l'énergie depuis le réseau alternatif (10) vers le réseau continu (6).

10. Procédé selon l'une quelconque des revendications 6 à 9 lorsqu'elle dépend de la revendication 5, comportant, lors d'une phase de charge auxiliaire, les étapes de :
- commande du premier interrupteur (20) et du deuxième interrupteur (22) pour qu'ils soient dans un état bloqué ;
- pilotage des modules de commutation (38) du convertisseur DC-DC (12) et de la branche auxiliaire (50) selon une loi de commande de convertisseur buck pour transférer de l'énergie électrique depuis le réseau continu (6) vers la branche auxiliaire (50).

11. Véhicule électrique ou hybride comportant une batterie (6), un moteur électrique (8) et un dispositif de conversion (4) selon l'une quelconque des revendications 1 à 5, le convertisseur DC-DC (12) étant relié à la batterie (6) par la première borne basse tension (26) et par la deuxième borne basse tension (28), chaque point de connexion (58) du convertisseur AC-DC (14) étant adapté pour être raccordé à une phase correspondante du moteur électrique (8).

## Patentansprüche

1. Umwandlungsvorrichtung (4) für ein Elektrofahrzeug, die die Übertragung elektrischer Energie zwischen einem Gleichstromnetz (6) und einem Wechselstromnetz (10) mit N Phasen ermöglicht, wobei N eine ganze Zahl größer oder gleich 1 ist,
wobei die Umwandlungsvorrichtung (4) umfasst:
einem DC-DC-Wandler (12) mit:
einen Niederspannungszweig (16), der zwischen eine erste Niederspannungsklemme (26) und eine zweite Niederspannungsklemme (28) geschaltet ist, und einen Hochspannungszweig (18), der zwischen eine erste Hochspannungsklemme (30) und eine zweite Hochspannungsklemme (32) geschaltet ist, wobei sowohl der Niederspannungszweig (16) als auch der Hochspannungszweig (18) zwei Unterzweige (34) umfasst, die an einem Mittelpunkt (36) in Reihe geschaltet sind, wobei jeder Unterzweig (34) ein Schaltmodul (38) umfasst;
einen ersten Schalter (20), der zwischen der ersten Niederspannungsklemme (26) und der ersten Hochspannungsklemme (30) geschaltet ist, und einen zweiten Schalter (22), der zwischen der zweiten Niederspannungsklemme (28) und der zweiten Hochspannungsklemme (32) geschaltet ist;
einen Transformator (24) mit einer Primärwicklung (44) und einer Sekundärwicklung (46), die magnetisch miteinander gekoppelt sind, wobei die Primärwicklung (44) an einem Ende mit dem Mittelpunkt (36) des Niederspannungszweiges (16) und an dem anderen Ende mit einer Primärspannungsreferenz verbunden ist, und wobei die Sekundärwicklung (46) an einem Ende mit dem Mittelpunkt (36) des Hochspannungszweiges (18) und an dem anderen Ende mit einer Sekundärspannungsreferenz verbunden ist;
einen AC-DC-Wandler (14), der einerseits mit der ersten Hochspannungsklemme (30) und mit der zweiten Hochspannungsklemme (32) des DC-DC-Wandlers (12) verbunden ist, mit N Verbindungspunkten (58), von denen jeder geeignet ist, mit einer entsprechenden Phase des Wechselstromnetzes (10) verbunden zu werden;
eine Steuerung (15), die konfiguriert ist, um den Durchlass-Zustand oder den gesperrten Zustand des ersten Schalters (20), des zweiten Schalters (22) und jedes Schaltmoduls (38) zu steuern, wobei die Steuerung (15) ferner konfiguriert ist, um den AC-DC-Wandler (14) zu steuern, um elektrische Energie von dem DC-DC-Wandler (12) zu dem Wechselstromnetz (10) oder von dem Wechselstromnetz (10) zu dem DC-DC-Wandler (12) zu übertragen.

2. Umwandlungsvorrichtung (4) nach Anspruch 1, wobei die Steuerung (15) ausgestaltet ist, um während einer Zugphase oder während einer Energierückgabephase:
den ersten Schalter (20) und den zweiten Schalter (22) so zu steuern, dass sie sich in einem gesperrten Zustand befinden;
das Schaltmodule (38) des DC-DC-Wandlers (12) gemäß einem Aufwärtswandler-Steuerbefehl zu steuern, der konfiguriert ist, dass elektrische Energie vom Niederspannungszweig (16) zum Hochspannungszweig (18) übertragen wird;
den AC-DC-Wandlers (14) gemäß einem Wechselrichter-Steuerbefehl zu steuern, der konfiguriert ist, dass Energie von dem Hochspannungszweig (18) zu den Verbindungspunkten (58) des AC-DC-Wandlers (14) zu übertragen.

3. Umwandlungsvorrichtung (4) nach Anspruch 1 oder 2, wobei die Steuerung (15) so konfiguriert ist, dass sie während einer Schnellladephase:
den ersten Schalter (20) und den zweiten Schalter (22) so steuert, dass sie sich in einem gesperrten Zustand befinden;
den AC-DC-Wandlers (14) gemäß einem Gleichrichter-Steuerbefehl steuert, der konfiguriert ist, dass Energie von dem Verbindungspunkten (58) des AC-DC-Wandlers (14) zu dem Hochspannungszweig (18) übertragen wird;
das Schaltmodule (38) des DC-DC-Wandlers (12) gemäß einem Abwärtswandler-Steuerbefehl steuert, der konfiguriert ist, dass elektrische Energie vom Hochspannungszweig (18) zum Niederspannungszweig (18) übertragen wird.

4. Umwandlungsvorrichtung (4) nach einem der Patentansprüche 1 bis 3, wobei die Steuerung (15) konfiguriert ist, dass sie während einer Langsamladephase, in der zwei aktive Verbindungspunkte (58) des AC-DC-Wandlers (14) zur Aufnahme von elektrischer Energie aus dem Wechselstromnetz (10) geeignet sind:
den ersten Schalter (20) und den zweiten Schalter (22) so steuert, so dass sie sich in einem Durchlass-Zustand befinden,
den AC-DC-Wandler (14) gemäß einem H-Gleichrichterbrücken-Steuerbefehl steuert, der so konfiguriert ist, dass er Energie von den aktiven Verbindungspunkten (58) des AC-DC-Wandlers (14) zum Hochspannungszweig (18) überträgt.

5. Umwandlungsvorrichtung (4) nach einem der Patentansprüche 1 bis 4, wobei der DC-DC-Wandler (12) weiter umfasst:
einem Hilfszweig (50), der sich zwischen zwei Anschlussklemmen erstreckt und zwei Unterzweige (55) umfasst, die an einem Mittelpunkt (57) in Reihe miteinander verbunden sind, wobei jeder Unterzweig (55) ein Schaltmodul (38) umfasst, das geeignet ist, zum Umschalten zwischen einer gesperrten Position, die den Durchgang eines elektrischen Stroms verhindert, und einer Durchlass-Position, die den Durchgang eines elektrischen Stroms erlaubt;
eine Hilfswicklung (52), die magnetisch mit der Primärwicklung (44) des Transformators (24) gekoppelt ist, wobei die Primärwicklung (44) an einem ihrer Enden mit dem Mittelpunkt (57) des Hilfszweigs (50) und an ihrem anderen Ende mit einer Hilfsspannungsreferenz verbunden ist;
und wobei die Steuerung (15) so konfiguriert ist, dass sie während einer Ladephase eines Akkumulators (56):
den ersten Schalter (20) und den zweiten Schalter (22) so steuert, dass sie sich in einem gesperrten Zustand befinden;
das Schaltmodule (38) des Hilfszweigs (50) gemäß einem Abwärtswandler-Steuerbefehl steuert, der so konfiguriert ist, dass er elektrische Energie vom Hochspannungszweig (18) zum Hilfszweig (50) überträgt.

6. Verfahren zur Steuerung einer Umwandlungsvorrichtung (4) nach einem der Ansprüche 1 bis 5, wobei der DC-DC-Wandler (12) über die erste Niederspannungsklemme (26) und über die zweite Niederspannungsklemme (28) mit einem Gleichstromnetz (6) verbunden ist, wobei das Verfahren während einer Zugphase die folgenden Schritte umfasst:
Verbinden jedes Verbindungspunktes (58) des AC-DC-Wandlers (14) mit einer entsprechenden Phase eines Elektromotors (8);
Anweisen des ersten Schalters (20) und des zweiten Schalters (22) so, dass sie sich in einem gesperrten Zustand befinden;
Ansteuern der Schaltmodule (38) des DC-DC-Wandlers (12) gemäß einem Aufwärtswandler-Steuerbefehl, um Energie vom Gleichstromnetz (6) zum Hochspannungszweig (18) zu übertragen;
Ansteuern des AC-DC-Wandlers (14) nach einem Wechselrichter-Steuerbefehl, um Energie vom Hochspannungszweig (18) zum Elektromotor (8) zu übertragen.

7. Verfahren nach Anspruch 6, bei dem während einer Energierückgabephase die Schritte:
Verbinden jedes Verbindungspunktes (58) des AC-DC-Wandlers (14) mit einer entsprechenden Phase eines Wechselstromnetzes (10);
Steuern des ersten Schalters (20) und des zweiten Schalters (22) so, dass sie sich in einem gesperrten Zustand befinden;
Steuern der Schaltmodule (38) des DC-DC-Wandlers (12) nach einem Aufwärtswandler-Steuerbefehl, um elektrische Energie vom Gleichstromnetz (6) zum Hochspannungszweig (18) zu übertragen;
Steuern des AC-DC-Wandlers (14) gemäß einem Wechselrichter-Steuerbefehl, um Energie von dem Hochspannungszweig (18) auf das Wechselstromnetz (10) zu übertragen.

8. Verfahren nach Anspruch 6 oder 7, mit den Schritten, während einer Schnellladephase:
Verbinden jedes Verbindungspunktes (58) des AC-DC-Wandlers (14) mit einer entsprechenden Phase eines Wechselstromnetzes (10);
Steuern des ersten Schalters (20) und des zweiten Schalters (22), so dass sie sich in einem gesperrten Zustand befinden;
Steuern des AC-DC-Wandlers (14) gemäß einem Gleichrichter-Steuerbefehl steuert, um vom Wechselstromnetz (10) zum Hochspannungszweig (18) zu übertragen;
Steuern der Schaltmodule (38) des DC-DC-Wandlers (12) gemäß einem Abwärtswandler-Steuerbefehl, um Energie von dem vom Hochspannungszweig (18) zum Gleichstromnetz (6) zu übertragen.

9. Verfahren nach einem der Ansprüche 6 bis 8, mit den Schritten, während einer Langsamladephase:
während einer Schnellladephase:
Verbinden jedes Verbindungspunktes (58) des AC-DC-Wandlers (14) mit einer entsprechenden Phase eines Wechselstromnetzes (10);
Steuern des ersten Schalters (20) und des zweiten Schalters (22), so dass sie sich in einem Durchlass-Zustand befinden;
Steuern des AC-DC-Wandlers (14) gemäß einem H-Brückengleichrichter-Steuerbefehl, um Energie vom Wechselstromnetz (10) zum Gleichstromnetz (6) zu übertragen.

10. Verfahren nach einem der Ansprüche 6 bis 9, soweit diese von Anspruch 5 anhängen, mit den Schritten, während einer Hilfsladephase:
Steuern des ersten Schalters (20) und des zweiten Schalters (22), so dass sie sich in einem gesperrten Zustand befinden;
Steuerung der Schaltmodule (38) des DC-DC-Wandlers (12) und des Hilfszweigs (50) nach einem Abwärtswandler-Steuerbefehl, um elektrische Energie aus dem Gleichstromnetz (6) an den Hilfszweig (50) zu übertragen.

11. Elektro- oder Hybridfahrzeug mit einer Batterie (6), einem Elektromotor (8) und einer Umwandlungsvorrichtung (4) gemäß einem der Ansprüche 1 bis 5, wobei der DC-DC-Wandler (12) über die Batterie (6) mit der ersten Niederspannungsklemme (26) und der zweiten Niederspannungsklemme (28) verbunden ist, wobei jeder Verbindungspunkt (58) des AC-DC-Wandlers (14) so angepasst ist, dass er mit einer entsprechenden Phase des Elektromotors (8) verbunden werden kann.

## Claims

1. A conversion device (4) for an electric vehicle, enabling electric energy to be transferred between a DC power supply (6) and an N-phase AC power supply (10), N being an integer higher than or equal to 1,
the conversion device (4) including:
- a DC-DC converter (12) comprising:
- a low voltage branch (16) connected between a first low voltage terminal (26) and a second low voltage terminal (28), and a high voltage branch (18) connected between a first high voltage terminal (30) and a second high voltage terminal (32), each of the low voltage branch (16) and the high voltage branch (18) comprising two sub-branches (34) in series connected to each other at a middle point (36), each sub-branch (34) comprising a switching module (38);
- a first switch (20) connected between the first low voltage terminal (26) and the first high voltage terminal (30), and a second switch (22) connected between the second low voltage terminal (28) and the second high voltage terminal (32);
- a transformer (24) comprising a primary winding (44) and a secondary winding (46) magnetically coupled to each other, the primary winding (44) being connected, through one of its ends, to the middle point (36) of the low voltage branch (16), and through the other of its ends to a primary voltage reference, and the secondary winding (46) being connected, through one of its ends, to the middle point (36) of the high voltage branch (18), and through the other of its ends to a secondary voltage reference;
- an AC-DC converter (14) connected on the one hand to the first high voltage terminal (30) and to the second high voltage terminal (32) of the DC-DC converter (12), including N connection points (58) each able to be connected to a corresponding phase of the AC power supply (10);
- a controller (15) configured to drive the ON or OFF state of the first switch (20), of the second switch (22) and of each switching module (38), the controller (15) being further configured to drive the AC-DC converter (14) to transfer electric energy from the DC-DC converter (12) to the AC power supply (10), or from the AC power supply (10) to the DC-DC converter (12).

2. The conversion device (4) according to claim 1, wherein the controller (15) is configured to, during a pulling phase or an energy restitution phase:
- control the first switch (20) and the second switch (22) such that they are in an OFF state;
- drive the switching modules (38) of the DC-DC converter (12) according to a control law of a boost converter configured to transfer electric energy from the low voltage branch (16) to the high voltage branch (18);
- drive the AC-DC converter (14) according to a control law of an inverter configured to transfer energy from the high voltage branch (18) to the connection points (58) of the AC-DC converter (14).

3. The conversion device (4) according to claim 1 or 2, wherein the controller (15) is configured to, during a quick charging phase:
- control the first switch (20) and the second switch (22) such that they are in an OFF state;
- drive the AC-DC converter (14) according to a control law of a rectifier configured to transfer energy from the connection points (58) of the AC-DC converter (14) to the high voltage branch (18);
- drive the switching modules (38) of the DC-DC converter (12) according to a control law of a buck converter configured to transfer electric energy from the high voltage branch (18) to the low voltage branch (16).

4. The conversion device (4) according to any of claims 1 to 3, wherein the controller (15) is configured to, during a slow charging phase during which two active connection points (58) of the AC-DC converter (14) are able to receive electric energy from the AC power supply (10):
- control the first switch (20) and the second switch (22) such that they are in an ON state;
- drive the AC-DC converter (14) according to a control law of an H-bridge rectifier configured to transfer energy from the active connection points (58) of the AC-DC converter (14) to the high voltage branch (18).

5. The conversion device (4) according to any of claims 1 to 4, wherein the DC-DC converter (12) further comprises:
- an auxiliary branch (50) extending between two connection terminals, and comprising two sub-branches (55) in series connected to each other at a middle point (57), each sub-branch (55) comprising a switching module (38) able to switch between an OFF position preventing an electric current from flowing, and an ON position enabling an electric current to flow;
- an auxiliary winding (52) magnetically coupled to the primary winding (44) of the transformer (24), the primary winding (44) being connected, through one of its ends, to the middle point (57) of the auxiliary branch (50), and through the other of its ends, to an auxiliary voltage reference;
and wherein the controller (15) is configured to, during an accumulator charging phase (56):
- control the first switch (20) and the second switch (22) such that they are in an OFF state;
- drive the switching modules (38) of the auxiliary branch (50) according to a control law of a buck converter configured to transfer electric energy from the high voltage branch (18) to the auxiliary branch (50).

6. A method for controlling a conversion device (4) according to any of claims 1 to 5, the DC-DC converter (12) being connected to a DC power supply (6) through the first low voltage terminal (26) and through the second low voltage terminal (28), the method including, during a pulling phase, the steps of:
- connecting each connection point (58) of the AC-DC converter (14) to a corresponding phase of an electric motor (8);
- controlling the first switch (20) and the second switch (22) such that they are in an OFF state;
- driving the switching modules (38) of the DC-DC converter (12) according to a control law of a boost converter to transfer electric energy from the DC power supply (6) to the high voltage branch (18);
- driving the AC-DC converter (14) according to a control law of an inverter to transfer energy from the high voltage branch (18) to the electric motor (8).

7. The method according to claim 6, including, during an energy restitution phase, the steps of:
- connecting each connection point (58) of the AC-DC converter (14) to a corresponding phase of an AC power supply (10);
- controlling the first switch (20) and the second switch (22) such that they are in an OFF state;
- driving the switching modules (38) of the DC-DC converter (12) according to a control law of a boost converter to transfer electric energy from the DC power supply (6) to the high voltage branch (18);
- driving the AC-DC converter (14) according to a control law of an inverter to transfer energy from the high voltage branch (18) to the AC power supply (10).

8. The method according to claim 6 or 7, including, during a quick charging phase, the steps of:
- connecting each connection point (58) of the AC-DC converter (14) to a corresponding phase of an AC power supply (10);
- controlling the first switch (20) and the second switch (22) such that they are in an OFF state;
- driving the AC-DC converter (14) according to a control law of a rectifier to transfer energy from the AC power supply (10) to the high voltage branch (18);
- driving the switching modules (38) of the DC-DC converter (12) according to a control law of a buck converter to transfer electric energy from the high voltage branch (18) to the DC power supply (6).

9. The method according to any of claims 6 to 8, including, during a slow charging phase, the steps of:
- connecting two active connection points (58) of the AC-DC converter (14) to corresponding phases of an AC power supply (10):
- controlling the first switch (20) and the second switch (22) such that they are in an ON state;
- driving the AC-DC converter (14) according to a control law of an H-bridge to transfer energy from the AC power supply (10) to the DC power supply (6).

10. The method according to any of claims 6 to 9 when dependent on claim 5, including, during an auxiliary charging phase, the steps of:
- controlling the first switch (20) and the second switch (22) such that they are in an OFF state;
- driving the switching modules (38) of the DC-DC converter (12) and the auxiliary branch (50) according to a control law of a buck converter to transfer electric energy from the DC power supply (6) to the auxiliary branch (50).

11. An electric or hybrid vehicle including a battery (6), an electric motor (8) and a conversion device (4) according to any of claims 1 to 5, the DC-DC converter (12) being connected to the battery (6) through the first low voltage terminal (26) and through the second low voltage terminal (28), each connection point (58) of the AC-DC converter (14) being adapted to be connected to a corresponding phase of the electric motor (8).
